# EUROPÄISCHE PATENTSCHRIFT

(11) **EP 4 193 567 B1**
(45) Veröffentlichungstag und Bekanntmachung des Hinweises auf die Patenterteilung: **03.04.2024**
(21) Anmeldenummer: 21743125.3
(22) Anmeldetag: 08.07.2021
(51) Int. Cl.: H04L 9/32

(54) **VERFAHREN ZUR SICHEREN AUSSTATTUNG EINES FAHRZEUGS MIT EINEM INDIVIDUELLEN ZERTIFIKAT**
METHOD FOR SECURELY EQUIPPING A VEHICLE WITH AN INDIVIDUAL CERTIFICATE
PROCÉDÉ POUR RÉALISER L'ÉQUIPEMENT SÉCURISÉ D'UN VÉHICULE À L'AIDE D'UN CERTIFICAT INDIVIDUEL

(30) Priorität: 07.08.2020 DE 102020004832
(43) Veröffentlichungstag der Anmeldung: 14.06.2023
(73) Patentinhaber: Mercedes-Benz Group AG, 70372 Stuttgart (DE)
(72) Erfinder: HELD, Albert, 89231 Neu-Ulm (DE); FRIESEN, Viktor, 76139 Karlsruhe (DE); MEIDLINGER, Daniel, 73579 Schechingen (DE); DETTLING, Matthias, 70597 Stuttgart (DE)
(74) Vertreter: Novagraaf Group
(86) Internationale Anmeldenummer: PCT/EP2021/068938
(87) Internationale Veröffentlichungsnummer: WO 2022/028806

(56) Entgegenhaltungen:
- EP-A1- 3 474 488
- DE-A1-102009 009 310
- DE-A1-102015 220 224
- DE-A1-102015 220 226

## Beschreibung

Die Erfindung betrifft ein Verfahren zur sicheren Ausstattung eines Fahrzeuges mit einem individuellen Zertifikat, nach der im Oberbegriff von Anspruch 1 näher definierten Art.

Moderne Fahrzeuge zeichnen sich durch eine zunehmende Vernetzung aus. Die Fahrzeuge sind dabei nicht nur mit Systemen wie dem WorldWideWeb verbunden sondern auch mit vom Fahrzeughersteller bzw. OEM betriebenen Systemen und Servern, beispielsweise herstellereigenen Applikationen und einem herstellereigenen Server, welcher häufig auch als Vehicle Backend bezeichnet wird. Diese werden vom Hersteller exklusiv für die eigene Fahrzeugflotte entwickelt, vermarktet und betrieben. All dies zusammen wird auch als Fahrzeug-Ökosystem bezeichnet.

In der Praxis ist es nun so, dass durch die vielfältigen Kommunikationsbeziehungen zwischen den einzelnen Systemkomponenten innerhalb eines solchen Fahrzeug-Ökosystems eine Vielzahl neuer Schnittstellen und Anwendungen entsteht, die allesamt durch geeignete kryptografische Verfahren, wie beispielsweise Mechanismen, Protokolle usw., abgesichert werden müssen. Die Absicherung dient einerseits dazu die Privatsphäre des Fahrzeugnutzers zu wahren und andererseits dazu keinen externen Eingriff in den Datenverkehr zu ermöglichen, welcher insbesondere bei der Übertragung von Daten, welche die Fahrzeugsteuerung betreffen, von Hackern genutzt werden könnte, um die Fahrzeuge anzugreifen und wichtige Funktionen zu manipulieren.

Dabei ist es offensichtlich, dass die Fahrzeuge an sich nicht mit dem fahrzeugexternen Server bzw. Backend kommunizieren können. Es sind in der Praxis immer einzelne in den Fahrzeugen verbaute Steuergeräte, die eine Verbindung zum Backend herstellen bzw. aufrechterhalten. Aus Sicht des Backends ist es jedoch so, dass es primär ganze Fahrzeuge und keine darin verbaute einzelne Steuergeräte kennt, daher ist es für das Backend wichtiger, sicher zu wissen, in welchem Fahrzeug das Steuergerät, mit dem es gerade kommuniziert, verbaut ist, als zu wissen, um welches Steuergerät es sich genau handelt aber das dazugehörige Fahrzeug nicht zu kennen.

Beide Standardverfahren (TLS, IPSec) basieren auf asymmetrischer Kryptographie, insbesondere auf asymmetrischen privaten Schlüsseln und für die dazugehörigen öffentlichen Schlüssel von einer zentralen vertrauenswürdigen Zertifizierungsstelle (Certificate Authority (CA)) ausgestellten Zertifikaten. Für eine sichere Kommunikation zwischen den Fahrzeugen und dem Backend sind dabei folgende Anforderungen von Bedeutung:
- die von den Fahrzeugen bzw. ihrem Steuergeräten genutzten Zertifikate müssen individuell sein, d.h. jedes Fahrzeug muss mindestens einen eigenen individuellen privaten Schlüssel besitzen, und
- das dazugehörige Zertifikat muss von einer innerhalb des Fahrzeug-Ökosystems vertrauenswürdigen zentralen Zertifizierungsstelle (CA) auf eine individuelle Fahrzeug-Identität ausgestellt sein, bspw. auf die die Fahrzeug Identifikationsnummer (VIN: vehicle identification number), welche auch als Fahrgestellnummer bezeichnet wird.

Dieser private Schlüssel sollte idealerweise gemeinsam mit dem dazugehörigen öffentlichen Schlüssel in einem sicheren Hardwarebereich (bspw. einem Hardware Sicherheitsmodul/HSM: Hardware Security Module) eines sich in dem Fahrzeug, zu dem das Zertifikat gehören soll, befindenden Steuergerätes erzeugt werden und diesen sicheren Bereich dieses Steuergerätes nie verlassen. Auf diese Weise kann sichergestellt werden, dass der private Schlüssel durch einen Angreifer praktisch nicht ermittelt werden kann.

Eine naheliegende Lösung wäre es dem Hersteller des Steuergerätes, das den individuellen privaten Schlüssel beherbergen soll, diese Aufgabe zu übertragen, in diesem Steuergerät bei dessen Herstellung ein fahrzeugindividuelles Schlüsselpaar zu erzeugen. Danach könnte man den öffentlichen Schlüssel aus dem Steuergerät aus lesen und dafür ein Zertifikat erstellen, wobei der private Schlüssel nicht auslesbar ist und für die gesamte Lebensdauer des Steuergerätes in diesem verbleibt. Diese Vorgehensweise ist jedoch aus zwei Gründen problematisch.

Erstens ist die Identität des Fahrzeugs, für das das Zertifikat ausgestellt werden soll, zum Zeitpunkt der Herstellung des Steuergerätes noch nicht bekannt, da es zu diesem Zeitpunkt nicht bekannt ist, in welchem Fahrzeug, d.h. im Fahrzeug mit welcher Identität, das Steuergerät später beim OEM verbaut werden wird. Zweitens wird das Steuergerät in der Regel von einem anderen Unternehmen als dem OEM hergestellt. Die fahrzeugindividuellen Zertifikate für die Absicherung der Kommunikation zwischen den Fahrzeugen und dem OEM-eigenen Backend bzw. anderen Teilnehmern des OEM-eigenen Fahrzeug-Ökosystems sollten jedoch vom OEM selbst und nicht vom Steuergerätehersteller ausgestellt werden, u. a. um eine potentielle missbräuchliche Ausstellung von Zertifikaten durch den Steuergerätehersteller auszuschließen. Theoretisch ist es zwar möglich, eine OEM-eigene Zertifizierungsstelle (CA) an die Fertigungslinien des Steuergeräteherstellers sicher anzubinden, dieses ist jedoch eine kostenintensive Lösung.

Die EP 3 474 488 A1 zeigt ähnlich wie auch die DE 10 2015 220 226 A1 ein gattungsgemäßes Verfahren zur Ausstattung eines Fahrzeugs mit einem individuellen Zertifikat. Zum weiteren Stand der Technik kann ferner auf die DE 10 2015 220 224 A1 hingewiesen werden.

Die Offenlegungsschrift DE 10 2009 009 310 A1 der Anmelderin stellt ein Verfahren bereit, mittels dem die sichere Kommunikation zwischen einem Benutzergerät mit einem Steuergerät eines Fahrzeugs und einem davon entfernt gelegenen Backend über ein öffentlich zugängliches Netz unter Verwendung digitaler Zertifikate möglich ist. Das Verfahren umfasst dabei die die Schritte des Erzeugens eines unspezifischen Zertifikats durch das Backend und des Sendens des unspezifischen Zertifikats an das Steuergerät, ferner das Empfangen und Speichern des unspezifischen Zertifikats im Steuergerät und das anschließende Herstellen einer Initialverbindung des Steuergeräts mit dem Backend unter Benutzung des unspezifischen Zertifikates als Identifizierer. Die Initialverbindung wird vom Backend nur angenommen, wenn der Identifizierer das unspezifische Zertifikat ist. Schließlich wird vom Backend eine Identifizierungsinformation des Fahrzeugs angefordert und von dem Steuergerät an das Backend zurückgesendet. Das Backend erzeugt dann ein spezifisches Zertifikats mit Hilfe der Identifizierungsinformation und sendet dieses an das Steuergerät. Dort wird es empfangen und gespeichert. Im Anschluss kann eine verschlüsselte Arbeitsverbindung aufgebaut werden.

Das in DE 10 2009 009 310 A1 vorgestellte Verfahren hat dabei einige prinzipbedingte Nachteile. Zum einen wird von der Zertifizierungsstelle nicht nur das individuelle Fahrzeugzertifikat generiert sondern auch das fahrzeugindividuelle Schlüsselpaar, für das das Zertifikat ausgestellt wird. Dies umfasst insbesondere auch den fahrzeugindividuellen privaten Schlüssel. Damit liegt der fahrzeugindividuelle private Schlüssel zum einen nicht nur dem Steuergerät bzw. Fahrzeug, von dem er genutzt werden soll, vor sondern ist zumindest auch noch der ihn erzeugenden Zertifizierungsstelle bekannt. Zum anderen muss dieser Schlüssel samt des Zertifikats von der ausstellenden Zertifizierungsstelle über eine relativ unsichere Verbindung zum Fahrzeug übertragen werden. Dies liegt daran, dass das Fahrzeug zu diesem Zeitpunkt noch über kein sicheres individuelles Zertifikat verfügt. Ferner kann sich die Zertifizierungsstelle nie sicher sein, dass sie das neu erstellte fahrzeugindividuelle Zertifikat, und insbesondere den schützenswerten individuellen privaten Schlüssel, auch wirklich an das Fahrzeug mit der richtigen Identität überträgt. Vielmehr könnte auch ein unberechtigter Dritter, der diese Identität lediglich vortäuscht, der Anforderer bzw. Empfänger des Zertifikats sein, da wegen des noch nicht vorliegenden fahrzeugindividuellen Zertifikats, zu diesem Zeitpunkt der Anforderer bzw. Empfänger noch nicht sicher authentifiziert werden.

Die Aufgabe der hier vorliegenden Erfindung besteht deshalb darin, ein verbessertes Verfahren zur sicheren Ausstattung eines Fahrzeugs mit einem individuellen Zertifikat gemäß dem Oberbegriff von Anspruch 1 anzugeben, das die Vorraussetzungen und Abläufe sicherer macht.

Erfindungsgemäß wird diese Aufgabe durch eine Verfahren mit den Merkmalen im Anspruch 1 und hier insbesondere im kennzeichnenden Teil des Anspruchs 1 gelöst. Weitere vorteilhafte Ausgestaltungen und Weiterbildungen des Verfahrens sind in den hiervon abhängigen Unteransprüchen angegeben.

Wie oben dargelegt, kann zum Zeitpunkt der Herstellung des Steuergerätes, das das fahrzeugindividuelle Zertifikat und insbesondere auch den fahrzeugidividuellen Schlüssel beherbergen soll, kein Zertifikat für eine Identität des Fahrzeugs ausgestellt werden, da diese noch nicht bekannt ist. Bei dem Verfahren gemäß der Erfindung wird daher zu diesem Zeitpunkt ein Zertifikat für eine Identität des Steuergeräts ausgestellt. Dabei kann es sich um ein Zertifikat für eine eindeutige und fälschungssichere, beispielsweise schreibgeschützte, Identität des Steuergeräts handeln, das beispielsweise das Hardware-Sicherheitsmodul (HSM) verbaut hat, in dem später der zum fahrzeugindividuellen Zertifikat gehörende private Schlüssel sicher abgelegt sein soll.

Um das zu ermöglichen, etabliert das erfindungsgemäße Verfahren jeweils eine Zertifizierungsstelle (CA - Certifiate Authority) mit jeweils einer Infrastruktur für öffentliche Schlüssel (PKI - Public Key Infrastructure) jeweils basierend auf einem asymmetrischen Schlüsselpaar sowohl für die Fahrzeuge als auch für die Steuergeräte. Der jeweilige private Schlüssel der Zertifizierungsstelle verbleibt dabei in der jeweiligen Zertifizierungsstelle die öffentlichen Schlüssel werden an die sie benötigenden Teilnehmer verteilt. Dazu gehört z.B. der fahrzeugexterne Server, welcher beispielsweise als das Backend ausgebildet ist.

Das Steuergerät kann nun, insbesondere bei seiner Herstellung, mit initialem kryptographischem Material ausgestattet werden, indem ein steuergeräteindividuelles Schlüsselpaar für das Steuergerät erzeugt wird und die Identität des Steuergeräts und sein öffentlicher Schlüssel an die Steuergeräte-Zertifizierungsstelle übermittelt werden. In der Steuergeräte-Zertifizierungsstelle wird dann für die übermittelten Daten mit Hilfe des privaten Schlüssels der Steuergeräte-Zertifizierungsstelle ein steuergeräteindividuelles Zertifikat erzeugt, welches in das Steuergerät eingebracht wird. Der öffentliche Schlüssel der Fahrzeug-Zertifizierungsstelle wird im Steuergerät manipulationssicher abgelegt und es wird die zur Identität des Steuergeräts gehörende Fahrzeug-Identität ermittelt und manipulationssicher ablegt. Damit ist das System auf das Anfordern und Ausstellen eines Zertifikats in sehr sicherer und gleichzeitig effizienter Art und Weise vorbereitet. Das Fahrzeug, bzw. genauer gesagt, ein bestimmtes im Fahrzeug verbautes geeignetes Steuergerät, kann so auf sichere Weise mit einem fahrzeugindividuellen auf die Fahrzeug-Identität ausgestellten Zertifikat ausgestattet werden.

Der geräteindividuelle private Schlüssel und das geräteindividuelle Zertifikat können dann vom Steuergerät zur Laufzeit dazu genutzt werden, um gemäß einer außerordentlich wichtigen und vorteilhaften Weiterbildung des Verfahrens gemäß der Erfindung eine den als Teil des vom Steuergerät erzeugten fahrzeugindividuellen Schlüsselpaares fahrzeugindividuellen öffentlichen Schlüssel enthaltende Zertifikatsignierungsanfrage (CSR -Certificate Signing Request) auf eine manipulationssichere Weise an die Zertifizierungsstelle zu übermitteln, um daraufhin von dieser ein fahrzeugindividuelles Zertifikat zu erhalten, wobei der fahrzeugindividuelle private Schlüssel das Steuergerät nie verlassen muss.

Dafür kann im Einzelnen das Steuergerät die Identität (FzgID) des Fahrzeugs, in dem es verbaut ist, ermitteln und in einer sicheren Umgebung des Steuergeräts das fahrzeugindividuelle Schlüsselpaar für ein individuelles Fahrzeug-Zertifikat generieren. Der fahrzeugindividuelle private Schlüssel verbleibt in der sicheren Umgebung. Die Zertifikatsignierungsanforderung (CSR) für zumindest die Identität des Fahrzeugs und den fahrzeugindividuellen öffentlichen Schlüssel, sowie gemäß einer sehr günstigen Weiterbildung auch des Typs des Steuergeräts, wird erstellt. Ferner wird eine Signatur erzeugt, indem die Zertifikatsignierungsanforderung mit dem steuergeräteindividuellen privaten Schlüssel signiert wird, wonach das so generierte Datenpaket samt dem steuergeräteindividuellen Zertifikat an den fahrzeugexternen Server versendet wird. Dieser empfängt das Datenpaket und überprüft mit Hilfe des dort abgelegten öffentlichen Schlüssels der Steuergeräte-Zertifizierungsstelle die Korrektheit des empfangenen steuergeräteindividuellen Zertifikats. Anschließend wird die Korrektheit der Signatur des Datenpakets mit Hilfe des in dem mitgeschickten steuergeräteindividuellen Zertifikat enthaltenen öffentlichen Schlüssels des Steuergeräts überprüft.

Der fahrzeugexterne Server extrahiert dann aus der Zertifikatsignierungsanforderung die Identität des Fahrzeugs und aus dem steuergeräteindividuellen Zertifikat die Identität des Steuergeräts sowie gemäß einer vorteilhaften Ausgestaltung den Typ des Steuergeräts. Er prüft dann, ob ein Eintrag für diese Daten hinterlegt ist, im Falle, dass eine dieser Prüfungen fehlschlägt der Vorgang durch den fahrzeugexternen Server abgebrochen wird. Andernfalls sendet der fahrzeugexterne Server die Zertifikatsignierungsanforderung für die Identität des Fahrzeugs und den fahrzeugindividuellen öffentlichen Schlüssel über einen geschützten Übertragungsweg an die Fahrzeug-Zertifizierungsstelle, welche anhand der Zertifikatsignierungsanforderung ein mit ihrem privaten Schlüssel signiertes, fahrzeugindividuelles Zertifikat ausstellt und dieses zurück an den fahrzeugexternen Server überträgt.

Der fahrzeugexterne Server überträgt dieses fahrzeugindividuelle Zertifikat dann an das in dem Fahrzeug verbaute Steuergerät, wobei das Steuergerät das empfangene fahrzeugindividuelle Zertifikat überprüft, indem zumindest die die Korrektheit der Signatur des fahrzeugindividuellen Zertifikats mit dem öffentlichen Schlüssel überprüft und nachgeprüft wird, ob das empfangene fahrzeugindividuelle Zertifikat der gesendeten Zertifikatsignierungsanforderung entspricht, also ob die Identität des Fahrzeugs und der fahrzeugindividuelle öffentliche Schlüssel in beiden Datenstrukturen übereinstimmen. Das fahrzeugindividuelle Zertifikat wird nun im Falle einer positiven Überprüfung lokal abgelegt. Es steht damit für die zukünftige Kommunikation zur Verfügung und kann auf dem beschriebenen Weg bei Bedarf jeweils erneuert werden.

Der fahrzeugindividuelle private Schlüssel wird also innerhalb des Steuergerätes erzeugt und verlässt dieses niemals, was einen ganz entscheidenden Vorteil und Sicherheitsgewinn gegenüber dem Stand der Technik darstellt. Insbesondere muss er nicht über einen relativ unsicheren Kommunikationskanal vom fahrzeugexternen Server bzw. Backend zum Fahrzeug übertragen werden. Ein weiterer Vorteil besteht darin, dass der fahrzeugexterne Server bei dieser Ausgestaltung des Verfahren mit großer Sicherheit davon ausgehen kann, dass es sich bei dem Zertifikat-Antragsteller um das Fahrzeug handelt, für das das Zertifikat auch tatsächlich ausgestellt werden soll.

Eine sehr günstige Ausgestaltung dieser Variante des erfindungsgemäßen Verfahrens sieht es darüber hinaus vor, dass das steuergeräteindividuelle und/oder das fahrzeugindividuelle Schlüsselpaar vom Steuergerät generiert wird und anschließend der steuergeräteindividuelle und/oder der fahrzeugindividuelle private Schlüssel sicher abgelegt wird und das Steuergerät nicht verlässt. Damit ist eine hohe Sicherheit gewährleistet, insbesondere wenn dies für beide Schlüsselarten so erfolgt.

Gemäß einer sehr vorteilhafteren Ausgestaltung des Verfahrens nach der Erfindung kann zusätzlich der Typ des Steuergeräts an die Steuergeräte-Zertifizierungsstelle übermittelt werden. Es wird also vorgeschlagen, dem steuergeräteindividuellen Zertifikat den Typ des Steuergeräts hinzuzufügen, zu dem dieses Steuergerät gehört (bspw. Head Unit (HU), Telematic Communication Unit (TCU), Rear Seat Unit (RSU) etc.), sofern dieser Typ aus der Identität des Steuergeräts nicht abgeleitet werden kann.

Ein vorteilhafte Weiterbildung hiervon sieht es außerdem vor, dass in das steuergeräteindividuelle Zertifikat die Identität des Steuergeräts als Teil des Subjekts und der Typ des Steuergeräts in ein Zusatzfeld des Zertifikats, eine sogenannte Certificate Extension eingeht. Auf diese Weise wird ermöglicht, dass mehrere im gleichen Fahrzeug verbaute Steuergeräte ein eigenes fahrzeugindividuelles Zertifikat ausgestellt bekommen können und diese verschiedenen fahrzeugindividuellen Zertifikate von der Gegenseite bei Bedarf auseinandergehalten werden können.

Zur Ermittlung der zur Identität des Steuergeräts gehörenden Fahrzeug-Identität kann es gemäß einer sehr günstigen Ausgestaltung des erfindungsgemäßen Verfahrens vorgesehen sein, dass beim Einbau des Steuergerätes in das Fahrzeug ein Datenpaket aus Identifikation des Fahrzeugs und Identifikation des Steuergeräts fälschungssicher erfasst und anschließend manipulationssicher an den fahrzeugexternen Server übertragen wird, welcher das Datenpaket manipulationssicher ablegt. Das Datenpaket kann dabei gemäß einer vorteilhaften Weiterbildung der Idee ferner den Typ des Steuergeräts zusätzlich umfassen.

Vorzugsweise kann es bei dem erfindungsgemäßen Verfahren dabei vorgesehen sein, dass das jeweilige individuelle Schlüsselpaar vom Steuergerät in einem Hardware Sicherheitsmodul (HSM) generiert wird und/oder zumindest dort sicher abgelegt wird, und dass es das Hardware Sicherheitsmodul nicht verlässt. Dies gilt auch hier wieder bevorzugt für beide Schlüsselarten ist aber insbesondere für den der fahrzeugindividuellen privaten Schlüssel wichtig und von besonderem Sicherheitsvorteil.

Eine außerordentlich vorteilhafte Weiterbildung des Verfahrens gemäß der Erfindung sieht es außerdem vor, dass bei der Herstellung des Fahrzeugs ein fälschungssicherer individueller digitaler Fahrzeugfingerabdruck erfasst und ein Datenpaket mit der Identität des Fahrzeugs und dem Fahrzeug-Fingerabdruck manipulationssicher an den fahrzeugexternen Server übertragen und dort manipulationssicher abgelegt wird. Das Steuergerät ermittelt bei der Erstellung der Zertifikatsignierungsanfrage einen eigenen steuergerätespezifischen Fahrzeugfingerabdruck, indem es die dafür notwendigen Informationen im Fahrzeug sammelt, wonach die die Signatur erzeugt wird, indem das den steuergerätespezifischen Fahrzeugfingerabdruck umfassende Datenpaket mit dem steuergeräteindividuellen privaten Schlüssel signiert wird. Dass so generierte um den gerätespezifischen Fahrzeug-Fingerabdruck erweiterte Datenpaket wird dann anstelle des oben beschriebenen Datenpakets an den fahrzeugexternen Server übermittelt und dort weiterverarbeitet.

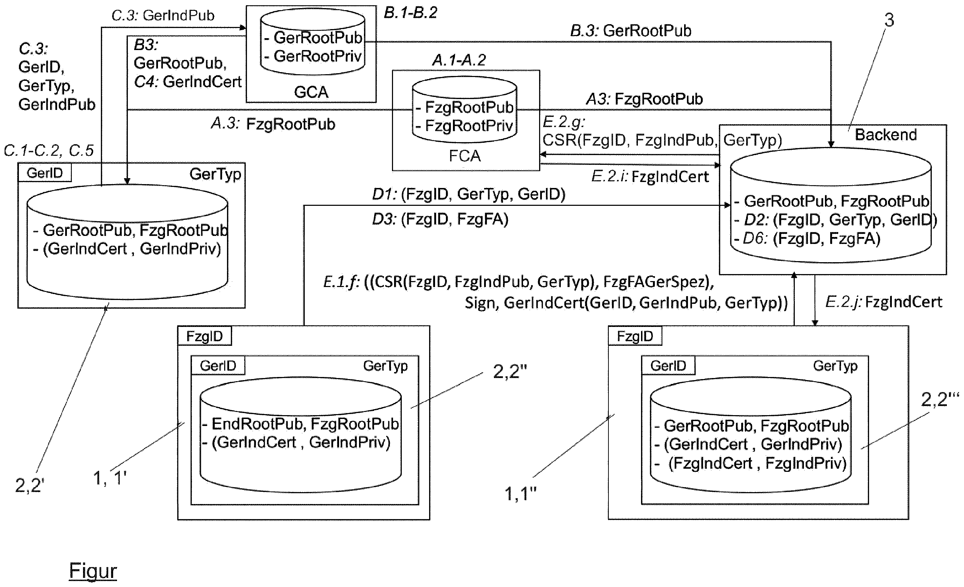

Weitere vorteilhafte Ausgestaltungen des erfindungsgemäßen Verfahrens ergeben sich auch aus den restlichen abhängigen Unteransprüchen und werden anhand des Ausführungsbeispiels deutlich, welches nachfolgenden unter Bezugnahme auf die Figur näher beschreiben wird.

Die einzige beigefügte Figur zeigt eine Abbildung eines Schemas zur Erläuterung des erfindungsgemäßen Verfahrens.

Das Schema der Figur zeigt ein angedeutetes Fahrzeug 1 zweimal, nämlich einmal mit 1' bezeichnet bei der Herstellung und einmal mit 1" bezeichnet im Betrieb. Ein Steuergerät 2 ist ebenfalls mehrfach gezeigt, einmal mit 2' bezeichnet bei der Herstellung, eine weiteres mal mit 2" bezeichnet in dem Fahrzeug 1' bei der Herstellung desselben und eine weiteres mal in dem Fahrzeug 1" beim Betrieb. Dort ist das Steuergerät 2 dann mit 2‴ bezeichnet. Außerdem ist ein fahrzeugexterner Server 3 dargestellt, z.B. eine Backend Server des jeweiligen OEM, eine Steuergeräte-Zertifizierungsstelle GCA und eine Fahrzeug-Zertifizierungsstelle FCA.

Im Einzelnen werden nun die folgende Schritte durchgeführt, deren Absatznummerierung sich so auch in der Figur wiederfinden:
A: Aufsetzen einer Fahrzeug-Infrastruktur für öffentliche Schlüssel, einer sogenannten Public Key Infrastructure (PKI) für fahrzeugindividuelle Zertifikate. Dies erfolgt jeweils einmalig pro Fahrzeugflotte.
   1. Es wird für eine Fahrzeug-Zertifizierungsstelle bzw. Fahrzeug-CA FCA ein asymmetrisches Schlüsselpaar FzgRootPub, FzgRootPriv, welches auch als Fahrzeug-Root-Schlüsselpaar bezeichnet werden kann, erzeugt.
   2. Der private Schlüssel FzgRootPriv wird in der FCA in einer sicheren Umgebung abgelegt und von der FCA zum Ausstellen/Signieren von fahrzeugindividuellen Zertifikaten verwendet.
   3. Der öffentliche Schlüssel FzgRootPub wird an alle Systeme verteilt, die von der FCA ausgestellte Zertifikate überprüfen können sollen, beispielsweise an das Backend 3.
B: Aufsetzen einer Steuergeräte-Infrastruktur (PKI) für steuergeräteindividuelle Zertifikate. Dies erfolgt einmalig pro Steuergerätehersteller und einer bestimmten Menge von von diesem Hersteller herzustellender Steuergeräte.
   1. Es wird für eine Steuergeräte-Zertifizerungsstelle bzw. Steuergeräte-CA GCA ein asymmetrisches Schlüsselpaar GerRootPub, GerRootPriv erzeugt.
   2. Der private Schlüssel GerRootPriv wird in der GCA in einer sicheren Umgebung abgelegt und von der GCA zum Ausstelen/Signieren von steuergeräteindividuellen Zertifikaten verwendet.
   3. Der öffentliche Schlüssel GerRootPub wird an alle Systeme verteilt, die von der GCA ausgestellte Zertifikate überprüfen können sollen, beispielsweise an das Backend 3.
C: Ausstatten des Steuergerätes 2 mit initialem kryptographischem Material, insbesondere mit einem steuergeräteindividuellen Zertifikat. Dies erfolgt einmalig pro Steuergerät 2 mit der individuellen Identität GerlD, dem Typ GerTyp, beispielsweise bei dessen Herstellung. Dort ist das Steuergerät 2 in der Figur mit 2' bezeichnet.
   1. Es wird ein steuergeräteindividuelles Schlüsselpaar GerlndPub, GerlndPriv für das Steuergerät mit der Identität GerlD erzeugt, vorzugsweise in einem in diesem Steuergerät 2 verbauten Hardware Sicherheitsmodul (HSM).
   2. Wird das Schlüsselpaar im Steuergerät 2 erzeugt, verbleibt der private Schlüssel GerlndPriv dort. Wird das Schlüsselpaar außerhalb des Steuergerätes 2 erzeugt, so wird GerlndPriv auf einem möglichst sicheren Weg in das Steuergerät 2 eingebracht und verlässt dieses nicht wieder.
   3. Die Identität GerID, der Steuergerätetyp GerTyp und der öffentliche Schlüssel GerlndPub werden an die GCA übermittelt, dort wird für dies Daten GerlD, GerlndPub und GerTyp mit Hilfe des GerRootPriv ein Zertifikat GerlndCert erzeugt, wobei bspw. GerlD als Teil des Subjekts und GerTyp bspw. als ein Zusatzfeld ("Extension") in das Zertifikat GerlndCert eingehen. Im Anschluss werden die gesamten Daten mit GerRootPriv signiert.
   4. GerlndCert wird von der GCA zurück zum Steuergerät 2 übertragen und dort abgelegt.
   5. FzgRootPub, der öffentliche Schlüssel der FCA, wird im Steuergerät manipulationssicher abgelegt.
D: Erfassen der Fahrzeug-Identität FzgID und eines Fahrzeug-Fingerabdrucks FzgFA. Dies erfolgt einmalig pro Steuergerät 2 des Typs GerTyp mit der Identität GerlD, bei dessen Einbau in ein Fahrzeug 1 mit der Identität FzgID, beispielsweise bei der Fahrzeugherstellung beim OEM.
   1. Beim Einbau eines Steuergerätes 2 mit GerID des Typs GerTyp in ein Fahrzeug 1 mit FzgID wird das Datenpaket FzgID, GerTyp, GerID fälschungssicher erfasst und anschließend fälschungssicher an das OEM-eigene Backend 3 übertragen.
   2. Das Backend 3 legt das Datenpaket FzgID, GerTyp, GerlD manipulationssicher ab.
   3. Bei der Herstellung des Fahrzeugs 1 wird in einer sicheren Umgebung ein fälschungssicherer individueller digitaler Fingerabdruck FzgFA des Fahrzeugs 1 erfasst und das Datenpaket FzgID, FzgFA wird manipulationssicher an das Backend 3 übertragen.
   4. In den Fahrzeug-Fingerabdruck FzgFA können vielfältige individuelle Fahrzeugdaten, bspw. individuelle Identitäten verschiedener im Fahrzeug verbauter Steuergeräte, vorzugsweise auch Daten, die nicht rückdokumentiert werden, einfließen, so dass dieser manuell nicht ohne weiteres nachgebaut werden kann.
   5. Der Fahrzeug-Fingerabdruck FzgFA muss derart gestaltet sein, dass er von einem in einem Fahrzeug 1 verbauten Steuergerät 2 bei dessen Betrieb zumindest teilweise "nachgebaut" werden kann, indem die in den Fahrzeug-Fingerabdruck FzgFA einfließenden Daten bspw. von im Fahrzeug 1 verbauten anderen Steuergeräten eingesammelt werden, beispielsweise über die verschiedenen Fahrzeugbusse.
   6. Das Backend 3 legt das Datenpaket FzgID, FzgFA manipulationssicher ab.
E: Falls das Fahrzeug 1 aus Sicht des Steuergerätes 2 ein oder ein neues Zertifikat benötigt, werden folgende Schritte durchgeführt.
   1. Das Steuergerät 2
      a. ermittelt seinen steuergerätespezifischen Fahrzeug-Fingerabdruck FzgFAGerSpez, indem es die dafür notwendigen Informationen einsammelt,
      b. ermittelt die Identität FzgID des Fahrzeugs, in dem es verbaut ist,
      c. generiert in einer sicheren Umgebung ein Schlüsselpaar FzglndPub, FzglndPriv für das fahrzeugindividuelle Zertifikat FzglndCert für das Fahrzeug 1 mit der Identität FzgID, wobei der fahrzeugindividuelle private Schlüssel FzglndPriv in der sicheren Umgebung verbleibt,
      d. erstellt eine Zertifikatsignierungsanfrage bzw. ein Certificate Signing Request (CSR) für FzgID, FzglndPub und GerTyp,
      e. erzeugt die Signatur Sign, indem das Datenpaket (CSR(FzglD, FzglndPub, GerTyp), FzgFAGerSpez) mit dem steuergeräteindividuellen privaten Schlüssel GerlndPriv signiert wird,
      f. versendet das Datenpaket ((CSR(FzglD, FzglndPub, GerTyp), FzgFAGerSpez), Sign, GerlndCert(GerlD, GerlndPub, GerTyp)) an das Backend 3.
   2. Das Backend 3 empfängt das Datenpaket und
      a. prüft mit Hilfe des dort abgelegten öffentlichen Schlüssels der Steuergeräte-Zertifizierungsstelle GCA GerRootPub die Korrektheit des steuergeräteindividuellen Zertifikats GerlndCert,
      b. prüft die Korrektheit der Signatur Sign des Datenpakets mit Hilfe des im mitgeschickten steuergeräteindividuellen Zertifikat GerlndCert enthaltenen öffentlichen Schlüssel GerlndPub,
      c. extrahiert aus dem CSR die Fahrzeug-Identität FzgID, extrahiert aus dem steuergeräteindividuellen Zertifikat GerlndCert die Identität GerlD und den Steuergerätetyp GerTyp des Steuergeräts 2 und prüft, ob im Backend 3 ein Eintrag für FzgID, GerTyp und GerlD hinterlegt ist,
      d. prüft, ob für die Identität FzgID des Fahrzeugs 1 ein Eintrag FzgID, FzgFA hinterlegt ist,
      e. prüft, ob der in der empfangenen Nachricht enthaltene steuergerätespezifische Fahrzeug-Fingerabdruck FzgFAGerSpez zu dem allgemeinen Fahrzeug-Fingerabdruck FzgFA passt,
      f. falls eine der obigen Prüfungen fehlschlägt: bricht es den Vorgang ab,
      g. andernfalls sendet es den CSR(FzglD, FzglndPub, GerTyp) für die Fahrzeug-Identität FzgID und den öffentlichen Schlüssel FzglndPub über einen geschützten Kanal an die Fahrzeug-CA FCA
      h. die FCA stellt anhand des CSR(FzglD, FzglndPub, GerTyp) für die Fahrzeug-Identität FzgID und den öffentlichen Schlüssel FzglndPub ein mit FzgRootPriv signiertes fahrzeugindividuelles Zertifikat FzglndCert aus, und
      i. die FCA schickt das fahrzeugindividuelle Zertifikat FzglndCert zurück an das Backend 3,
      j. diese schickt das fahrzeugindividuelleZertifikat FzglndCert an das Steuergerät 2, das im Fahrzeug 1 verbaut ist, zurück.
   3. Das Steuergerät 2
      a. prüft das empfangene Zertifikat FzglndCert, d.h.
         i. es prüft die Korrektheit der Signatur des Zertifikats mit FzgRootPub
         ii. es prüft, ob das empfangene Zertifikat dem gesendeten CSR entspricht, d.h., ob FzgID, FzglndPub, GerTyp in beiden Datenstrukturen übereinstimmen
      b. legt das fahrzeugindividuelle Zertifikat FzglndCert lokal ab.
   4. Ab jetzt ist das Steuergerät 2 mit der identität GerlD im Besitz eines auf die Fahrzeug-Identität FzgID ausgestellten fahrzeugindividuellen Zertifikats FzglndCert und des dazugehörigen fahrzeugindividuellen privaten Schlüssels FzglndPriv und kann die vom Fahrzeug 1 an dieses Steuergerät 2 übertragenen Aufgaben sicher wahrnehmen.

## Patentansprüche

1. Verfahren zur sicheren Ausstattung eines Fahrzeuges mit einem individuellen Zertifikat, wobei das Fahrzeug über wenigstens ein Steuergerät und eine Kommunikationseinheit verfügt, die dazu eingerichtet ist bei Bedarf eine Verbindung zwischen dem wenigstens einen Steuergerät und einem fahrzeugexternen Server aufzubauen, wobei beide einen asymmetrischen kryptographischen Mechanismus zur sicheren Authentifizierung implementiert haben, wobei eine Fahrzeug-Zertifizierungsstelle (FCA) mit einer Fahrzeug-Infrastruktur für öffentliche Schlüssel (PKI) basierend auf einem asymmetrischen Schlüsselpaar (FzgRootPub, FzgRootPriv) der Fahrzeug-Zertifizierungsstelle (FCA) etabliert wird, wobei der private Schlüssel (FzgRootPriv) dieses Schlüsselpaars (FzgRootPub, FzgRootPriv) der Fahrzeug-Zertifizierungsstelle (FCA) in der Fahrzeug-Zertifizierungsstelle (FCA) verbleibt und der öffentliche Schlüssel (FzgRootPub) dieses Schlüsselpaars ((FzgRootPub, FzgRootPriv) der Fahrzeug-Zertifizierungsstelle (FCA) an die ihn benötigten Teilnehmer verteilt wird, wobei eine Steuergeräte-Zertifizierungsstelle (GCA) mit einer Steuergeräte-Infrastruktur für öffentliche Schlüssel (PKI) basierend auf einem asymmetrischen Schlüsselpaar (GerRootPub, GerRootPriv) der Steuergeräte-Zertifizierungsstelle (GCA) etabliert wird, wobei der private Schlüssel (GerRootPriv) dieses Schlüsselpaars (GerRootPub, GerRootPriv) der Steuergeräte-Zertifizierungsstelle (GCA) in der Steuergeräte-Zertifizierungsstelle (GCA) verbleibt und der öffentliche Schlüssel (GerRootPub) dieses Schlüsselpaars (GerRootPub, GerRootPriv) der Steuergeräte-Zertifizierungsstelle (GCA) an die ihn benötigten Teilnehmer verteilt wird, wobei
das Steuergerät mit initialem kryptographischem Material ausgestattet wird, indem ein steuergeräteindividuelles Schlüsselpaar (GerIndPub, GerlndPriv) für das Steuergerät erzeugt wird und die Identität des Steuergeräts (GerID) und sein öffentlicher Schlüssel (GerIndPub) an die Steuergeräte-Zertifizierungsstelle (GCA) übermittelt werden, wonach
in der Steuergeräte-Zertifizierungsstelle (GCA) für die übermittelten Daten (GerID, , GerlndPub) mit Hilfe des privaten Schlüssels (GerRootPriv) der Steuergeräte-Zertifizierungsstelle (GCA) ein steuergeräteindividuelles Zertifikat (GerlndCert) erzeugt wird, wonach das steuergeräteindividuelle Zertifikat (GerlndCert) zurück zum Steuergerät übertragen und dort eingebracht und manipulationssicher abgelegt wird,
**dadurch gekennzeichnet, dass**
der öffentliche Schlüssel (FzgRootPub) der Fahrzeug-Zertifizierungsstelle (FCA), im Steuergerät manipulationssicher abgelegt wird, wobei
zur Anforderung eines ersten oder eines neuen Zertifikat, folgende Schritte durchgeführt werden:
das Steuergerät ermittelt die Identität (FzgID) des Fahrzeugs, in dem es verbaut ist, wobei
in einer sicheren Umgebung des Steuergeräts ein fahrzeugindividuelles Schlüsselpaar (FzglndPub, FzglndPriv) für ein individuelles Fahrzeug-Zertifikat generiert wird, wobei der fahrzeugindividuelle private Schlüssel (FzglndPriv) in der sicheren Umgebung verbleibt, wonach
eine Zertifikatsignierungsanforderung (CSR) für zumindest die Identität (FzgID) des Fahrzeugs und den fahrzeugindividuellen öffentlichen Schlüssel (FzgIndPub erstellt wird, wonach
eine Signatur (Sign) erzeugt wird, indem die Zertifikatsignierungsanforderung (CSR(FzglD, FzglndPub)) mit dem steuergeräteindividuellen privaten Schlüssel (GerlndPriv) des Steuergeräts signiert wird, wonach das so generierte Datenpaket (CSR(FzglD, FzglndPub), Sign, GerlndCert(GerID, GerlndPub)) an den fahrzeugexternen Server versendet wird, wobei
der fahrzeugexterne Server das Datenpaket (CSR(FzglD, FzglndPub), Sign, GerlndCert(GerID, GerlndPub)) empfängt und danach mit Hilfe des dort abgelegten öffentlichen Schlüssels (GerRootPub) der Steuergeräte-Zertifizierungsstelle (GCA) die Korrektheit des steuergeräteindividuellen Zertifikats (GerlndCert) überprüft, wobei
der fahrzeugexterne Server aus der Zertifikatsignierungsanforderung (CSR) die Identität (FzgID) des Fahrzeugs und aus dem steuergeräteindividuellen Zertifikat (GerlndCert) die Identität (GerID) des Steuergeräts extrahiert und prüft, ob ein Eintrag für diese Daten (FzgID, GerlD) hinterlegt ist, wobei falls eine dieser Prüfungen fehlschlägt der Vorgang durch den fahrzeugexternen Server abgebrochen wird, wonach
der fahrzeugexterne Server (3) die Korrektheit der Signatur (Sign) des empfangenen Datenpakets mit Hilfe des im mitgeschickten steuergeräteindividuellen Zertifikat (GerlndCert) enthaltenen öffentlichen Schlüssels (GerlndPub) des Steuergeräts (2) überprüft, wonach andernfalls der fahrzeugexterne Server die Zertifikatsignierungsanforderung (CSR(FzglD, FzglndPub)) für die Identität (FzgID) des Fahrzeugs und den fahrzeugindividuellen öffentlichen Schlüssel (FzglndPub) über einen geschützten Übertragungsweg an die Fahrzeug-Zertifizierungsstelle (FCA) sendet, welche anhand der Zertifikatsignierungsanforderung (CSR(FzgID, FzglndPub) für die Identität (FzgID) des Fahrzeugs und den fahrzeugindividuellen öffentlichen Schlüssel (FzgIndPub) ein mit dem privaten Schlüssel (FzgRootPriv) signiertes fahrzeugindividuelles Zertifikat (FzglndCert) ausstellt und dieses zurück an den fahrzeugexternen Server überträgt, wonach
dieser das fahrzeugindividuelle Zertifikat (FzglndCert) an das in dem Fahrzeug verbaute Steuergerät überträgt, wobei
das Steuergerät das empfangene fahrzeugindividuelle Zertifikat (FzglndCert) überprüft, indem zumindest die Korrektheit der Signatur des fahrzeugindividuellen Zertifikats (FzglndCert) mit dem öffentlichen Schlüssel (FzgRootPub) überprüft und nachgeprüft wird, ob das empfangene fahrzeugindividuelle Zertifikat (FzglndCert) der gesendeten Zertifikatsignierungsanforderung (CSR) entspricht, also ob zumindest die Identität (FzgID) des Fahrzeugs und der fahrzeugindividuelle öffentliche Schlüssel (FzglndPub) in beiden Datenstrukturen übereinstimmen, wonach
das fahrzeugindividuelle Zertifikat (FzglndCert) im Falle einer positiven Überprüfung lokal abgelegt wird.

2. Verfahren nach Anspruch 1,
**dadurch gekennzeichnet, dass**
zusätzlich der Typ (GerTyp) des Steuergeräts an die Steuergeräte-Zertifizierungsstelle (GCA) übermittelt wird.

3. Verfahren nach Anspruch 2,
**dadurch gekennzeichnet, dass**
in das steuergeräteindividuelle Zertifikat (GerlndCert) die Identität (GerID) des Steuergeräts als Teil des Subjekts und der Typ (GerTyp) des Steuergeräts als ein Zusatzfeld eingehen und die gesamten Daten mit dem privaten Schlüssel (GerRootPriv) der Steuergeräte-Zertifizierungsstelle (GCA) signiert werden

4. Verfahren nach einem der Ansprüche 1 bis 3,
**dadurch gekennzeichnet, dass**
zur Ermittlung der zur Identität (GerID) des Steuergeräts gehörenden Fahrzeug-Identität (FzgID) beim Einbau des Steuergerätes in das Fahrzeug ein Datenpaket aus Identifikation (FzgID) des Fahrzeugs und Identifikation (GerID) des Steuergeräts fälschungssicher erfasst und anschließend manipulationssicher an den fahrzeugexternen Server übertragen wird, welcher das Datenpaket (FzgID, GerID) manipulationssicher ablegt,

5. Verfahren nach Anspruch 4,
**dadurch gekennzeichnet, dass**
zusätzlich der Typ (GerTyp) des Steuergeräts in das Datenpaket einfließt.

6. Verfahren nach einem der Ansprüche 1 bis 5,
**dadurch gekennzeichnet, dass**
das steuergeräteindividuelle Schlüsselpaar (GerindPub, GerlndPriv) vom Steuergerät generiert wird und anschließend der steuergeräteindividuelle private Schlüssel (GerlndPriv) sicher abgelegt wird und das Steuergerät nicht verlässt.

7. Verfahren nach einem der Ansprüche 1 bis 6,
**dadurch gekennzeichnet, dass**
das fahrzeugindividuelle Schlüsselpaar (FzglndPub, FzglndPriv) vom Steuergerät generiert wird und anschließend der fahrzeugindividuelle private Schlüssel (FzglndPriv) sicher abgelegt wird und das Steuergerät nicht verlässt.

8. Verfahren nach Anspruch 6 oder 7
**dadurch gekennzeichnet, dass**
das jeweilige individuelle Schlüsselpaar (GerIndPub, GerlndPriv; FzglndPub, FzglndPriv) vom Steuergerät in einem Hardware Sicherheitsmodul (HSM) generiert wird und/oder zumindest dort sicher abgelegt wird und der jeweilige private Schlüssel (GerlndPriv, FzglndPriv) das Hardware Sicherheitsmodul (HSM) danach nicht verlässt.,

9. Verfahren nach einem der Ansprüche 1 bis 8,
**dadurch gekennzeichnet, dass**
bei der Herstellung des Fahrzeugs ein fälschungssicherer individueller digitaler Fahrzeug-Fingerabdruck (FzgFA) erfasst und ein Datenpaket mit der Identität (FzgID) des Fahrzeugs und dem Fahrzeug-Fingerabdruck (FzgFA) manipulationssicher an den fahrzeugexternen Server übertragen und dort manipulationssicher abgelegt wird, wobei
das Steuergerät bei der Erstellung der Zertifikatsignierungsanfrage (CSR) einen eigenen steuergerätespezifischen Fahrzeug-Fingerabdruck (FzgFAGerSpez) ermittelt, indem es die dafür notwendigen Informationen im Fahrzeug sammelt, wonach die die Signatur (Sign) erzeugt wird, indem das das den steuergerätespezifischen Fahrzeugfingerabdruck (FzgFAGerSpez) umfassende Datenpaket (CSR(FzglD, FzglndPub), FzgFAGerSpez) mit dem steuergeräteindividuellen privaten Schlüssel (GerlndPriv) signiert wird, wonach das so generierte um den steuergerätespezifischen Fahrzeug-Fingerabdruck (FzgFAGerSpez) erweiterte Datenpaket anstelle des Datenpakets (CSR(FzglD, FzglndPub), Sign, GerlndCert(GerID, GerlndPub)) gemäß Anspruch 6 an den fahrzeugexternen Server übermittelt und dort weiterverarbeitet wird.

10. Verfahren nach einem der Ansprüche 1 bis 9,
**dadurch gekennzeichnet, dass**
bei dem Erstellen der Zertifikatsignierungsanforderung (CSR), dem Erstellen des fahrzeugindividuellen Zertifikats (FzglndCert), der Extrahierung von Daten aus der Zertifikatsignierungsanforderung (CSR) und/oder der Überprüfung der Zertifikatsignierungsanforderung (CSR) oder des signierten fahrzeugindividuellen Zertifikats (FzglndCert) der Typ (GerTyp) des Steuergeräts berücksichtigt wird.

## Claims

1. Method for securely equipping a vehicle with an individual certificate, the vehicle having at least one control device and a communication unit which is designed to establish a connection as required between the at least one control device and a vehicle-external server, the control device and the server both having an asymmetric cryptographic mechanism for secure authentication, a vehicle certification authority (FCA) being established with vehicle infrastructure for a public key (PKI) on the basis of an asymmetric key pair (FzgRootPub, FzgRootPriv) of the vehicle certification authority (FCA), the private key (FzgRootPriv) of this key pair (FzgRootPub, FzgRootPriv) of the vehicle certification authority (FCA) remaining in the vehicle certification authority (FCA) and the public key (FzgRootPub) of this key pair ((FzgRootPub, FzgRootPriv) of the vehicle certification authority (FCA) being distributed to the participants that require it, a control device certification authority (GCA) being established with a control device infrastructure for a public key (PKI) on the basis of an asymmetric key pair (GerRootPub, GerRootPriv) of the control device certification authority (GCA), the private key (GerRootPriv) of this key pair (GerRootPub, GerRootPriv) of the control device certification authority (GCA) remaining in the control device certification authority (GCA) and the public key (GerRootPub) of this key pair (GerRootPub, GerRootPriv) of the control device certification authority (GCA) being distributed to the participants who require it,
the control device being equipped with an initial cryptographic material by a control device-individual key pair (GerlndPub, GerIndPriv) being generated for the control device and the identity of the control device (GerID) and its public key (GerIndPub) being transmitted to the control device certification authority (GCA), after which
a control device-individual certificate (GerIndCert) is generated in the control device certification authority (GCA) for the transmitted data (GerID, GerIndPub) by means of the private key (GerRootPriv) of the control device certification authority (GCA), after which the control device-individual certificate (GerIndCert) is transmitted back to the control device and is entered there and stored in a tamper-proof manner,
**characterized in that**
the public key (FzgRootPub) of the vehicle certification authority (FCA) is stored in a tamper-proof manner in the control device,
the following steps being performed in order to request a first or a new certificate:
the control device determines the identity (FzgID) of the vehicle in which it is installed,
in a secure environment of the control device, a vehicle-individual key pair (FzgIndPub, FzgIndPriv) is generated for an individual vehicle certificate, the vehicle-individual private key (FzgIndPriv) remaining in the secure environment, after which
a certificate signing request (CSR) for at least the identity (FzgID) of the vehicle and the vehicle-individual public key (FzgIndPub) is created, after which
a signature (Sign) is generated by the certificate signing request (CSR(FzglD, FzglndPub)) being signed with the control device-individual private key (GerIndPriv) of the control device, after which the data packet generated in this way (CSR(FzgID, FzglndPub), Sign, GerIndCert(GerID, GerIndPub)) is sent to the vehicle-external server,
the vehicle-external server receiving the data packet (CSR(FzgID, FzgIndPub), Sign, GerIndCert(GerID, GerIndPub)) and then checking the correctness of the control device-individual certificate (GerIndCert) by means of the public key (GerRootPub) of the control device certification authority (GCA) stored there,
the vehicle-external server extracting the identity (FzgID) of the vehicle from the certificate signing request (CSR) and the identity (GerID) of the control device from the control device-individual certificate (GerIndCert) and checking whether an entry for these data (FzgID, GerID) is stored,
the process being aborted by the vehicle-external server if one of these checks fails, after which
the vehicle-external server (3) checks the correctness of the signature (Sign) of the received data packet by means of the public key (GerIndPub) of the control device (2) contained in the accompanying control device-individual certificate (GerIndCert), otherwise the vehicle-external server sends the certificate signing request (CSR(FzglD, FzglndPub)) for the identity (FzgID) of the vehicle and the vehicle-individual public key (FzgIndPub) via a protected transmission path to the vehicle certification authority (FCA) which, on the basis of the certificate signing request (CSR(FzglD, FzgIndPub)), outputs a vehicle-individual certificate (FzglndCert) signed with the private key (FzgRootPriv) for the identity (FzgID) of the vehicle and the vehicle-individual public key (FzgIndPub) and transmits this certificate back to the vehicle-external server, after which
this server transmits the vehicle-individual certificate (FzglndCert) to the control device installed in the vehicle,
the control device checking the received vehicle-individual certificate (FzgIndCert) by checking at least the correctness of the signature of the vehicle-individual certificate (FzglndCert) with the public key (FzgRootPub) and checking whether the received vehicle-individual certificate (FzglndCert) corresponds to the sent certificate signing request (CSR), i.e. whether at least the identity (FzgID) of the vehicle and the vehicle-individual public key (FzgIndPub) match in both data structures,
after which
the vehicle-individual certificate (FzglndCert) is stored locally in the event of a positive check.

2. Method according to claim 1,
**characterized in that**
the type (GerTyp) of the control device is also transmitted to the control device certification authority (GCA).

3. Method according to claim 2,
**characterized in that**
the identity (GerID) of the control device is entered into the control device-individual certificate (GerIndCert) as part of the subject and the type (GerTyp) of the control device is entered as an additional field and the entire data are signed with the private key (GerRootPriv) of the control unit certification authority (GCA).

4. Method according to any of claims 1 to 3,
**characterized in that**
in order to determine the vehicle identity (FzgID) belonging to the identity (GerID) of the control device, a data packet consisting of identification (FzgID) of the vehicle and identification (GerID) of the control device is recorded in a forgery-proof manner when the control device is installed in the vehicle and is then transmitted in a tamper-proof manner to the vehicle-external server which stores the data packet (FzgID, GerID).

5. Method according to claim 4,
**characterized in that**
the type (Gertype) of the control device is also input into the data packet.

6. Method according to any of claims 1 to 5,
**characterized in that**
the control device-individual key pair (GerlndPub, GerIndPriv) is generated by the control device and is then stored securely for the control device-individual private key (GerIndPriv) and does not leave the control device.

7. Method according to any of claims 1 to 6,
**characterized in that**
the vehicle-individual key pair (FzgIndPub, FzglndPriv) is generated by the control device and is then stored securely for the vehicle-individual private key (FzgIndPriv) and does not leave the control device.

8. Method according to either claim 6 or claim 7,
**characterized in that**
each key pair (GerIndPub, GerIndPriv; FzglndPub, FzgIndPriv) is generated by the control device in a hardware security module (HSM) and/or is at least stored securely there, and each private key (GerIndPriv, FzglndPriv) does not leave the hardware security module (HSM) afterward.

9. Method according to any of claims 1 to 8,
**characterized in that**
a forgery-proof individual digital vehicle fingerprint (FzgFA) is recorded during production of the vehicle and a data packet having the identity (FzgID) of the vehicle and the vehicle fingerprint (FzgFA) is transmitted to the vehicle-external server in a tamper-proof manner and stored there in a tamper-proof manner,
the control device determining its own control device-specific vehicle fingerprint (FzgFAGerSpez) when creating the certificate signing request (CSR) by the information required for this being collected in the vehicle, after which the signature (Sign) is generated by the data packet (CSR(FzglD, FzglndPub)) comprising the control device-specific vehicle fingerprint (FzgFAGerSpez) being signed with the control device-individual private key (GerIndPriv), after which the data packet, which is generated in this way and is extended by the control device-specific vehicle fingerprint (FzgFAGerSpez), is transmitted to the vehicle-external server instead of the data packet (CSR(FzgID, FzgIndPub), Sign, GerIndCert(GerID, GerIndPub)) according to claim 6 and is further processed there.

10. Method according to any of claims 1 to 9,
**characterized in that**
when creating the certificate signing request (CSR), when creating the vehicle-individual certificate (FzglndCt), when extracting data from the certificate signing request (CSR) and/or when checking the certificate signing request (CSR) or the signed vehicle-individual certificate (FzglndCert), the type (GerTyp) of the control device is taken into account.

## Revendications

1. Procédé pour l'équipement sécurisé d'un véhicule d'un certificat propre, le véhicule disposant d'au moins un appareil de commande et d'une unité de communication, laquelle est configurée pour créer, en cas de nécessité, une connexion entre l'au moins un appareil de commande et un serveur externe au véhicule, les deux possédant de manière implantée un mécanisme cryptographique asymétrique pour l'authentification sécurisée, une autorité de certification de véhicule (FCA) étant établie, laquelle comporte une infrastructure de véhicule pour des clés publiques (PKI) sur la base d'une paire de clés (FzgRootPub, FzgRootPriv) asymétriques de l'autorité de certification de véhicule (FCA), la clé privée (FzgRootPriv) de ladite paire de clés (FzgRootPub, FzgRootPriv) de l'autorité de certification de véhicule (FCA) restant dans l'autorité de certification de véhicule (FCA) et la clé publique (FzgRootPub) de ladite paire de clés (FzgRootPub, FzgRootPriv) de l'autorité de certification de véhicule (FCA) étant distribuée aux participants qui en ont besoin, une autorité de certification d'appareil de commande (GCA) étant établie, laquelle comporte une infrastructure d'appareil de commande pour des clés publiques (PKI) sur la base d'une paire de clés (GerRootPub, GerRootPriv) asymétriques de l'autorité de certification d'appareil de commande (GCA), la clé privée (GerRootPriv) de ladite paire de clés (GerRootPub, GerRootPriv) de l'autorité de certification d'appareil de commande (GCA) restant dans l'autorité de certification d'appareil de commande (GCA) et la clé publique (GerRootPub) de ladite paire de clés (GerRootPub, GerRootPriv) de l'autorité de certification d'appareil de commande (GCA) étant distribuée aux participants qui en ont besoin,
l'appareil de commande étant équipé de matériel cryptographique initial par le fait qu'une paire de clés (GerIndPub, GerIndPriv) propre à l'appareil de commande est générée pour l'appareil de commande et l'identité de l'appareil de commande (GerID) et sa clé publique (GerIndPub) sont transmises à l'autorité de certification d'appareil de commande (GCA), suite à quoi
un certificat propre à l'appareil de commande (GerIndCert) est généré dans l'autorité de certification d'appareil de commande (GCA) pour les données transmises (GerID, , GerIndPub) à l'aide de la clé privée (GerRootPriv) de l'autorité de certification d'appareil de commande (GCA), suite à quoi le certificat propre à l'appareil de commande (GerIndCert) est transmis en retour à l'appareil de commande et y est introduit et stocké de manière protégée contre toute manipulation,
**caractérisé en ce que**
la clé publique (FzgRootPub) de l'autorité de certification de véhicule (FCA) est stockée de manière protégée contre toute manipulation dans l'appareil de commande,
les étapes suivantes étant réalisées pour la requête d'un premier ou d'un nouveau certificat :
l'appareil de commande détermine l'identité (FzgID) du véhicule dans lequel il est monté,
une paire de clés (FzgIndPub, FzgIndPriv) propre au véhicule pour un certificat de véhicule propre étant générée dans un environnement sécurisé de l'appareil de commande, la clé privée (FzgIndPriv) propre au véhicule restant dans l'environnement sécurisé, suite à quoi
une requête de signature de certificat (CSR) est élaborée pour au moins l'identité (FzgID) du véhicule et la clé publique (FzgIndPub) propre au véhicule, suite à quoi
une signature (Sign) est générée par le fait que la requête de signature de certificat (CSR(FzgID, FzgIndPub)) est signée avec la clé privée (GerIndPriv) propre à l'appareil de commande de l'appareil de commande, suite à quoi le paquet de données (CSR(FzgID, FzgIndPub), Sign, GerIndCert(GerID, GerIndPub)) ainsi généré est envoyé au serveur externe au véhicule,
le serveur externe au véhicule recevant le paquet de données (CSR(FzgID, FzgIndPub), Sign, GerIndCert(GerID, GerIndPub)) et vérifiant ensuite, à l'aide de la clé publique (GerRootPub) qui y est stockée de l'autorité de certification d'appareil de commande (GCA), l'exactitude du certificat propre à l'appareil de commande (GerIndCert),
le serveur externe au véhicule extrayant, à partir de la requête de signature de certificat (CSR), l'identité (FzgID) du véhicule et, à partir du certificat propre à l'appareil de commande (GerIndCert), l'identité (GerID) de l'appareil de commande et testant si une entrée est enregistrée pour ces données (FzgID, GerID),
le processus étant interrompu par le serveur externe au véhicule si l'un de ces tests échoue, suite à quoi
le serveur externe au véhicule (3) teste l'exactitude de la signature (Sign) du paquet de données reçu à l'aide de la clé publique (GerIndPub) de l'appareil de commande (2) contenue dans le certificat propre à l'appareil de commande (GerIndCert) envoyé conjointement, suite à quoi, dans le cas contraire, le serveur externe au véhicule envoie la requête de signature de certificat (CSR(FzgID, FzgIndPub)) pour l'identité (FzgID) du véhicule et la clé publique (FzgIndPub) propre au véhicule, par l'intermédiaire d'une voie de transmission protégée, à l'autorité de certification de véhicule (FCA) qui, à l'aide de la requête de signature de certificat (CSR(FzgID, FzgIndPub)) pour l'identité (FzgID) du véhicule et la clé publique (FzgIndPub) propre au véhicule, délivre un certificat propre au véhicule (FzgIndCert) signé avec la clé privée (FzgRootPriv) et le transmet en retour au serveur externe au véhicule, suite à quoi
celui-ci transmet le certificat propre au véhicule (FzgIndCert) à l'appareil de commande monté dans le véhicule,
l'appareil de commande vérifiant le certificat propre au véhicule (FzgIndCert) reçu en vérifiant au moins l'exactitude de la signature du certificat propre au véhicule (FzgIndCert) à l'aide de la clé publique (FzgRootPub) et en contrôlant si le certificat propre au véhicule (FzgIndCert) reçu correspond à la requête de signature de certificat (CSR) envoyée, c'est-à-dire si au moins l'identité (FzgID) du véhicule et la clé publique (FzgIndPub) propre au véhicule coïncident dans les deux structures de données,
suite à quoi
le certificat propre au véhicule (FzgIndCert) est stocké localement dans le cas d'une vérification positive.

2. Procédé selon la revendication 1,
**caractérisé en ce que**
le type (GerTyp) de l'appareil de commande est en outre transmis à l'autorité de certification d'appareil de commande (GCA).

3. Procédé selon la revendication 2,
**caractérisé en ce que**
dans le certificat propre à l'appareil de commande (GerIndCert), l'identité (GerID) de l'appareil de commande est entrée en tant que partie du sujet et le type (GerTyp) de l'appareil de commande est entré en tant que champ supplémentaire, et l'ensemble des données est signé avec la clé privée (GerRootPriv) de l'autorité de certification d'appareil de commande (GCA).

4. Procédé selon l'une des revendications 1 à 3,
**caractérisé en ce que**
pour la détermination de l'identité de véhicule (FzgID) appartenant à l'identité (GerID) de l'appareil de commande lors du montage de l'appareil de commande dans le véhicule, un paquet de données, constitué de l'identification (FzgID) du véhicule et de l'identification (GerID) de l'appareil de commande, est détecté de manière protégée contre toute falsification et ensuite transmis, de manière protégée contre toute manipulation, au serveur externe au véhicule, lequel stocke le paquet de données (FzgID, GerID) de manière protégée contre toute manipulation.

5. Procédé selon la revendication 4,
**caractérisé en ce que**
le type (GerTyp) de l'appareil de commande est en outre intégré dans le paquet de données.

6. Procédé selon l'une des revendications 1 à 5,
**caractérisé en ce que**
la paire de clés (GerIndPub, GerIndPriv) propre à l'appareil de commande est générée par l'appareil de commande et la clé privée (GerIndPriv) propre à l'appareil de commande est ensuite stockée de manière sécurisée et ne quitte pas l'appareil de commande.

7. Procédé selon l'une des revendications 1 à 6,
**caractérisé en ce que**
la paire de clés (FzgIndPub, FzgIndPriv) propre au véhicule est générée par l'appareil de commande et la clé privée (FzgIndPriv) propre au véhicule est ensuite stockée de manière sécurisée et ne quitte pas l'appareil de commande.

8. Procédé selon la revendication 6 ou 7,
**caractérisé en ce que**
la paire de clés (GerIndPub, GerIndPriv ; FzglndPub, FzgIndPriv) propre respective est générée par l'appareil de commande dans un module de sécurité matériel (HSM) et/ou y est au moins stockée de manière sécurisée et la clé privée (GerlndPriv, FzgIndPriv) respective ne quitte par la suite pas le module de sécurité matériel (HSM).

9. Procédé selon l'une des revendications 1 à 8,
**caractérisé en ce que**
lors de la fabrication du véhicule, une empreinte de véhicule (FzgFA) numérique propre protégée contre toute falsification est détectée et un paquet de données comportant l'identité (FzgID) du véhicule et l'empreinte de véhicule (FzgFA) est transmis de manière protégée contre toute manipulation au serveur externe au véhicule et y est stocké de manière protégée contre toute manipulation,
l'appareil de commande déterminant, lors de l'élaboration de la requête de signature de certificat (CSR), une empreinte de véhicule (FzgFAGerSpez) unique spécifique à l'appareil de commande par le fait qu'il collecte les informations nécessaires à cette fin dans le véhicule, suite à quoi la signature (Sign) est générée par le fait que le paquet de données (CSR(FzgID, FzgIndPub), FzgFAGerSpez) comprenant l'empreinte de véhicule (FzgFAGerSpez) spécifique à l'appareil de commande est signé avec la clé privée (GerIndPriv) propre à l'appareil de commande, suite à quoi le paquet de données ainsi généré et étendu à l'empreinte de véhicule (FzgFAGerSpez) spécifique à l'appareil de commande est transmis, au lieu du paquet de données (CSR(FzgID, FzgIndPub), Sign, GerIndCert(GerID, GerIndPub)) selon la revendication 6, au serveur externe au véhicule et y est traité.

10. Procédé selon l'une des revendications 1 à 9,
**caractérisé en ce que**
lors de l'élaboration de la requête de signature de certificat (CSR), de l'élaboration du certificat propre au véhicule (FzgIndCert), de l'extraction de données de la requête de signature de certificat (CSR) et/ou de la vérification de la requête de signature de certificat (CSR) ou du certificat propre au véhicule (FzgIndCert) signé, le type (GerTyp) de l'appareil de commande est pris en considération.
